# EUROPEAN PATENT SPECIFICATION

(11) **EP 4 557 402 B1**
(45) Date of publication and mention of the grant of the patent: **13.05.2026**
(21) Application number: 24214158.8
(22) Date of filing: 20.11.2024
(51) Int. Cl.: H01M 4/525, H01M 10/052, H01M 10/0525, H01M 10/0567, H01M 10/0568, H01M 10/0569, H01M 10/42

(54) **ELECTROLYTE SOLUTION FOR RECHARGEABLE LITHIUM BATTERY AND RECHARGEABLE LITHIUM BATTERY INCLUDING THE SAME**
ELEKTROLYTLÖSUNG FÜR EINE WIEDERAUFLADBARE LITHIUMBATTERIE UND WIEDERAUFLADBARE LITHIUMBATTERIE DAMIT
SOLUTION ÉLECTROLYTIQUE POUR BATTERIE AU LITHIUM RECHARGEABLE ET BATTERIE AU LITHIUM RECHARGEABLE LA COMPRENANT

(30) Priority: 20.11.2023 KR 20230161470
(43) Date of publication of application: 21.05.2025
(73) Proprietor: Samsung SDI Co., Ltd., Yongin-si, Gyeonggi-do 17084 (KR)
(72) Inventor: LEE, Tae Jin, Yongin-si, Gyeonggi-do 17084 (KR); KIM, Minseo, Yongin-si, Gyeonggi-do 17084 (KR); KIM, Dahyun, Yongin-si, Gyeonggi-do 17084 (KR); WOO, Myungheui, Yongin-si, Gyeonggi-do 17084 (KR)
(74) Representative: Gulde & Partner

(56) References cited:
- WO-A1-01/63686
- US-A1- 2020 251 780
- US-A1- 2023 238 567

## Description

### BACKGROUND

### 1. Field

This disclosure relates to an electrolyte solution for a rechargeable lithium battery and a rechargeable lithium battery including the same.

### 2. Description of the Related Art

Recently, with the rapid spread of electronic devices that use batteries, such as mobile phones, laptop computers, and/or electric vehicles, the demand or desire for rechargeable batteries with relatively high energy density and high capacity is rapidly increasing. Accordingly, research and development to improve the performance of rechargeable lithium batteries is actively underway or being pursued.

Rechargeable lithium batteries include a positive electrode and a negative electrode, each including an active material capable of intercalating and deintercalating lithium ions, and an electrolyte solution, and generate electrical energy through oxidation and reduction reactions if lithium ions are intercalated and deintercalated to/from the positive electrode and the negative electrode. For examle US2020/251780A1 discloses an electrolyte solution for a rechargeable lithium battery comprising diphenyl sulfone.

Recently, active research has been conducted on rechargeable lithium batteries with high capacity, high energy density, and high safety for use as a driving power source for hybrid vehicles and/or electric vehicles, or as a power storage power source (e.g., for power storage stations and/or power walls).

In rechargeable lithium batteries, the electrolyte plays a role in transferring lithium ions, and can exhibit significantly higher ionic conductivity by including organic solvents and lithium salts. These electrolyte solutions play a role in determining the safety and performance of rechargeable lithium batteries.

When a rechargeable lithium battery is in an overcharged state, the battery generates heat rapidly and gas is also generated, raising issues with the safety of the battery due to cell explosion, and/or the like. Additionally, if a rechargeable lithium battery is subject to rapid charging, there is a problem where lithium is electrodeposited on the negative electrode and the resistance inside the battery increases.

Accordingly, there is a need or desire for the development of an electrolyte solution to implement a battery with excellent or suitable safety even under overcharging and rapid charging conditions.

### SUMMARY

The invention is defined by the appended claims. The description that follows is subjected to this limitation. Any disclosure lying outside the scope of said claims is only intended for illustrative as well as comparative purposes. Aspects according to some embodiments are directed toward an electrolyte solution for a rechargeable lithium battery that has excellent or suitable safety under overcharging and rapid charging conditions and excellent or suitable room-temperature cycle-life characteristics.

Aspects according to some embodiments are directed toward a rechargeable lithium battery including the electrolyte solution.

Additional aspects will be set forth in part in the description which follows and, in part, will be apparent from the description, or may be learned by practice of the presented embodiments of the disclosure.

In one or more embodiments, an electrolyte solution for a rechargeable lithium battery includes a non-aqueous organic solvent; a lithium salt; and an additive,

wherein the additive includes a first compound represented by Chemical Formula 1 and a second compound represented by Chemical Formula 2.

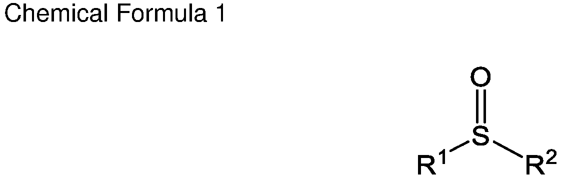

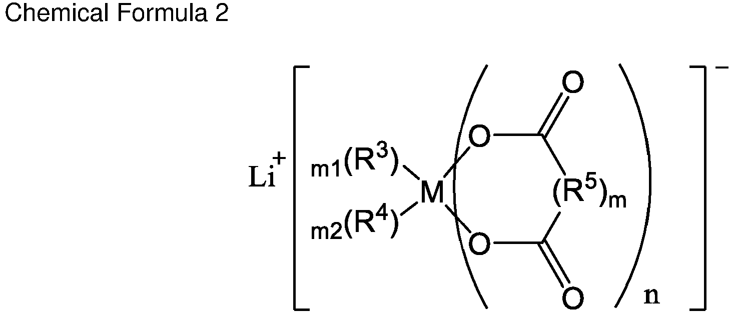

In Chemical Formula 1,
R¹ and R² are each independently a substituted or unsubstituted C1 to C20 alkyl group or a substituted or unsubstituted C6 to C30 aryl group, provided that at least one of R¹ and R² is a substituted or unsubstituted C6 to C30 aryl group,
in Chemical Formula 2,
M is boron (B) or phosphorus (P),
R³ and R⁴ are each independently hydrogen, a halogen (F, Cl, Br, or I), or a substituted or unsubstituted C1 to C10 alkyl group,
R⁵ is a substituted or unsubstituted methylene group,
n is an integer of 1 to 3, and
m is 0 or 1,
m1 and m2 are each independently an integer from 0 to 2.

In one or more embodiments, a rechargeable lithium battery includes a positive electrode including a positive electrode active material; a negative electrode including a negative electrode active material; a separator between the positive electrode and the negative electrode; and the aforementioned electrolyte solution.

The electrolyte solution for a rechargeable lithium battery according to one or more embodiments has excellent or suitable safety under overcharging and rapid charging conditions, and can implement a rechargeable lithium battery with excellent or suitable room-temperature cycle-life characteristics.

### BRIEF DESCRIPTION OF THE DRAWINGS

The accompanying drawings are included to provide a further understanding of the present disclosure and are incorporated in and constitute a part of this specification. The drawings illustrate embodiments of the present disclosure and, together with the description, serve to explain principles of the present disclosure. In the drawings,
FIG. 1 is a schematic illustration of a cylindrical battery according to some embodiments.
FIG. 2 is a schematic illustration of a prismatic battery according to some embodiments.
FIG. 3 is a schematic illustration of a pouch-type or kind battery according to some embodiments.
FIG. 4 is a schematic illustration of a pouch-type or kind battery according to some embodiments.
FIG. 5 is a graph showing the results of overcharging and rapid charging evaluation of the rechargeable lithium battery cells manufactured in Examples 1 to 2 and Comparative Examples 1 to 4.
FIG. 6 is a graph showing the room-temperature cycle-life evaluation results of the rechargeable lithium battery cells manufactured in Examples 1 to 2 and Comparative Examples 1 to 4.

### DETAILED DESCRIPTION

Hereinafter, embodiments of the present disclosure will be described in more detail. However, these embodiments are presented as an example, and the present disclosure is not limited thereto, and the present disclosure is defined by the scope of the claims thereof.

Unless otherwise specified in this specification, what is indicated in the singular may also include the plural. In addition, unless otherwise specified, "A or B" may refer to "including A, including B, or including A and B".

As used herein, "combination thereof" refers to a mixture, laminate, composite, copolymer, alloy, blend, reaction product, and/or the like of the constituents.

As used herein, if a definition is not otherwise provided, a particle diameter may be an average particle diameter. In addition, the particle diameter refers to the average particle diameter (D50), which refers to the diameter of particles having a cumulative volume of 50 volume% in the particle size distribution. The average particle size (D50) may be measured by a suitable method (e.g., known to those skilled in the art), for example, by a particle size analyzer, a transmission electron microscope image, or a scanning electron microscope image. In one or more embodiments, a dynamic light-scattering measurement device is used to perform a data analysis, and the number of particles is counted for each particle size range. From this, the average particle diameter (D50) value may be easily obtained through a calculation. In one or more embodiments, the average particle size (D50) can be measured using a laser diffraction method. When measured using the laser diffraction method, for example, the particles to be measured may be dispersed in a dispersion medium, and then introduced into a commercially available laser diffraction particle diameter measuring device (e.g., Microtrac MT 3000), and ultrasonic waves of about 28 kHz with an output of 60 W may be irradiated to calculate an average particle diameter (D50) on the basis of 50% of the particle diameter distribution in the measuring device. Also, unless otherwise defined, in the present disclosure, the term "particle diameter" refers to an average diameter if particles or crystallites are spherical and refers to an average major axis length if particles or crystallites are non-spherical.

As used herein, if a definition is not otherwise provided, the term "substituted" refers to replacement of at least one hydrogen of a substituent or a compound by deuterium, a halogen, a hydroxyl group, an amino group, a C1 to C30 amine group, a nitro group, a C1 to C40 silyl group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C20 alkoxy group, a C1 to C10 fluoroalkyl group, and a cyano group.

For example, the term "substituted" may refer to replacement of at least one hydrogen of a substituent or a compound by deuterium, a halogen, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C10 fluoroalkyl group, or a cyano group. For example, the term "substituted" may refer to replacement of at least one hydrogen of a substituent or a compound by deuterium, a halogen, a C1 to C20 alkyl group, a C6 to C30 aryl group, a C1 to C10 fluoroalkyl group, or a cyano group. In one or more embodiments, the term "substituted" may refer to replacement of at least one hydrogen of a substituent or a compound by deuterium, a halogen group, a C1 to C5 alkyl group, a C6 to C18 aryl group, a C1 to C5 fluoroalkyl group, or a cyano group. For example, the term "substituted" may refer to replacement of at least one hydrogen of a substituent or a compound by deuterium, a cyano group, a halogen, a methyl group, an ethyl group, a propyl group, a butyl group, a phenyl group, a biphenyl group, a terphenyl group, a trifluoromethyl group, or a naphthyl group.

An electrolyte solution for a rechargeable lithium battery according to one or more embodiments includes a non-aqueous organic solvent; a lithium salt; and an additive, wherein the additive includes a first compound, and a second compound.

When the first compound, the second compound, and the lithium salt are used in combination, a rechargeable lithium battery with excellent or suitable safety under overcharging and rapid charging conditions and excellent or suitable room-temperature cycle-life characteristics may be implemented.

### First Compound

The first compound is a sulfoxide-based compound, which effectively suppresses the heating temperature (e.g., suppresses the temperature increase due to heating) of the battery under overcharge operating conditions.

The first compound is represented by Chemical Formula 1.

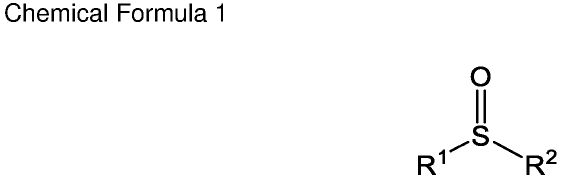

In Chemical Formula 1, R¹ and R² are each independently a substituted or unsubstituted C1 to C20 alkyl group or a substituted or unsubstituted C6 to C30 aryl group, provided that at least one of R¹ and R² is a substituted or unsubstituted C6 to C30 aryl group.

For example, at least one of R¹ and R² may be a substituted or unsubstituted C6 to C30 aryl group.

In one or more embodiments, the first compound represented by Chemical Formula 1 may be represented by Chemical Formula 1-1 or Chemical Formula 1-2. In an embodiment, the first compound represented by Chemical Formula 1 may be represented by Chemical Formula 1-1.

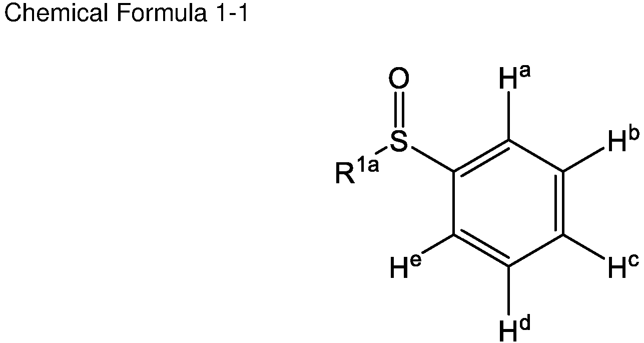

In Chemical Formula 1-1,
R^{1a} is a substituted or unsubstituted C1 to C20 alkyl group, and
H^{a} to H^{e} are each independently hydrogen, a halogen, a hydroxyl group, a cyano group, a nitro group, a substituted or unsubstituted C1 to C20 alkyl group, a substituted or unsubstituted C1 to C20 alkoxy group, a substituted or unsubstituted C2 to C20 alkenyl group, a substituted or unsubstituted C2 to C20 alkynyl group, a substituted or unsubstituted C3 to C20 cycloalkyl group, a substituted or unsubstituted C6 to C20 aryl group, or a substituted or unsubstituted C2 to C20 heteroaryl group.

As a specific example, H^{a} to H^{e} may each independently be hydrogen, a halogen group, a substituted or unsubstituted C1 to C20 alkyl group, or a substituted or unsubstituted C1 to C20 alkoxy group.

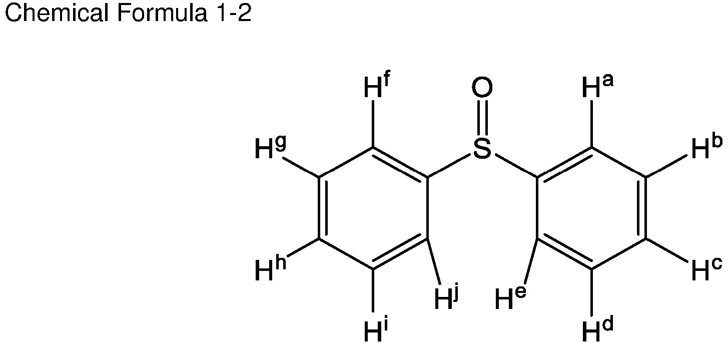

In Chemical Formula 1-2,
H^{a} to H^{j} are each independently hydrogen, a halogen, a hydroxyl group, a cyano group, a nitro group, a substituted or unsubstituted C1 to C20 alkyl group, a substituted or unsubstituted C1 to C20 alkoxy group, a substituted or unsubstituted C2 to C20 alkenyl group, a substituted or unsubstituted C2 to C20 alkynyl group, a substituted or unsubstituted C3 to C20 cycloalkyl group, a substituted or unsubstituted C6 to C20 aryl group, or a substituted or unsubstituted C2 to C20 heteroaryl group.

In some embodiments, H^{a} to H^{j} may each independently be hydrogen, a halogen group, a substituted or unsubstituted C1 to C20 alkyl group, or a substituted or unsubstituted C1 to C20 alkoxy group.

In an embodiment, the first compound may be one or more selected from among the compounds listed in Group 1.

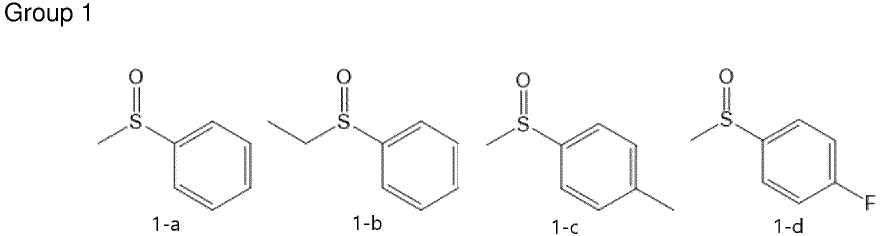

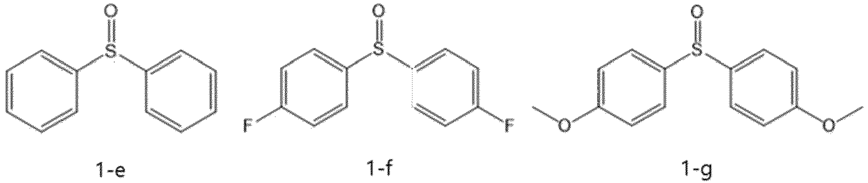

In one or more embodiments, the first compound may be included in an amount of greater than 0.05 wt%, or greater than or equal to 0.1 wt%, and less than 10 wt%, or less than or equal to 5 wt%, based on (100 wt% of) a total weight of the electrolyte solution for a rechargeable lithium battery.

For examples, the first compound may be included in the amount of greater than 0.05 wt% and less than 10 wt%, for example, greater than 0.05 wt% and less than or equal to 5 wt%, greater than or equal to 0.1 wt% and less than 10 wt%, or 0.1 wt% to 5 wt%.

If the first compound is included in an amount of less than or equal to 0.05 wt% based on a total weight of the electrolyte solution for a rechargeable lithium battery, an effect of improving battery safety during overcharging is minimal or reduced, and if it is included in an amount of greater than or equal to 10 wt%, the resistance of the battery increases (or increases excessively).

### Second Compound

The second compound is a lithium salt with an oxalate group, which is rapidly reduced and decomposed if the battery is operated, forming a SEI (solid electrolyte interface) film on the negative electrode, which prevents or substantially prevents lithium ions from being electrodeposited on the negative electrode and increases the internal resistance of the battery.

The second compound is represented by Chemical Formula 2.

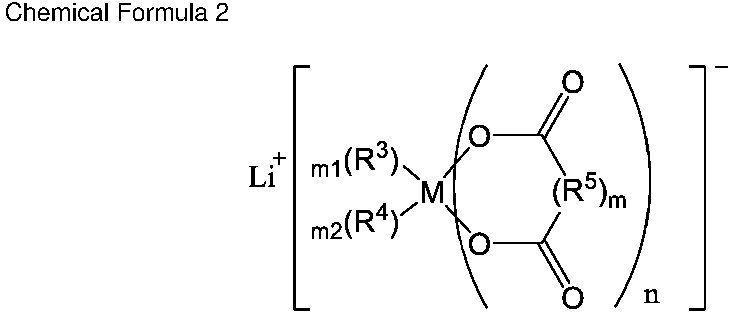

In Chemical Formula 2,
M is B (boron) or P (phosphorus),
R³ and R⁴ are each independently hydrogen, a halogen (F, Cl, Br, or I), or a substituted or unsubstituted C1 to C10 alkyl group,
R⁵ is a substituted or unsubstituted methylene group,
n is an integer of 1 to 3, and
m is 0 or 1,
m1 and m2 are each independently an integer from 0 to 2.

For example, M may be B, R³ and R⁴ may each independently be hydrogen or a halogen group (F, Cl, Br, or I), n may be 1 or 2, and m may be 0 or 1.

In one or more embodiments, the second compound represented by Chemical Formula 2 may include one or more selected from among the compounds represented by Chemical Formula 2-1 to Chemical Formula 2-8. In some embodiments, the second compound represented by Chemical Formula 2 may include one or more selected from among the compounds represented by Chemical Formula 2-1 to Chemical Formula 2-4.

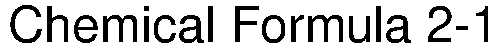

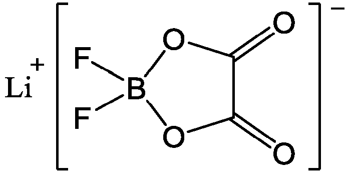

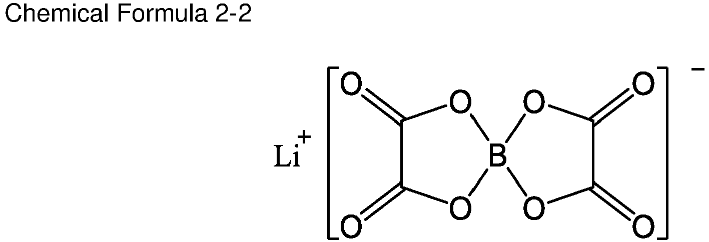

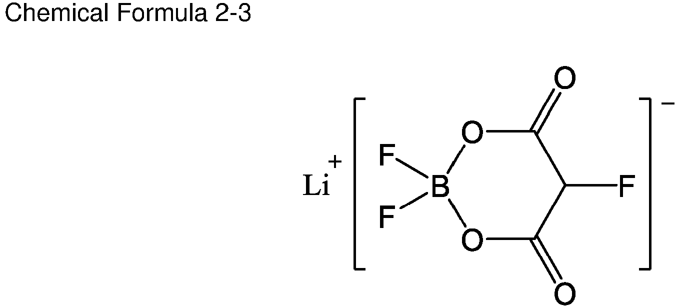

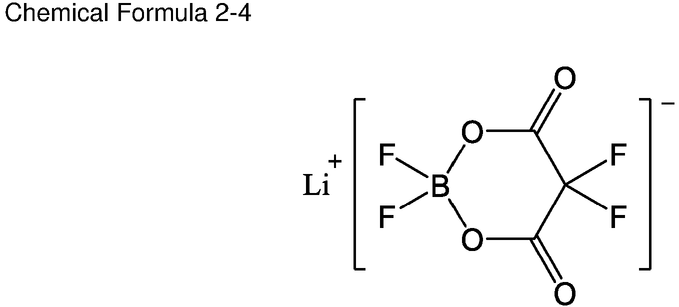

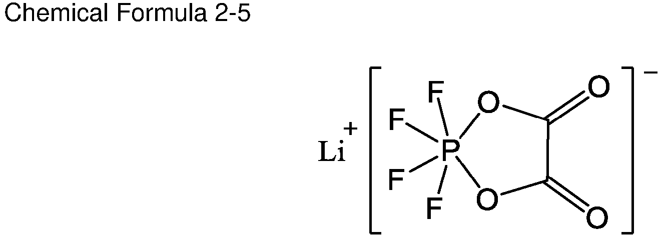

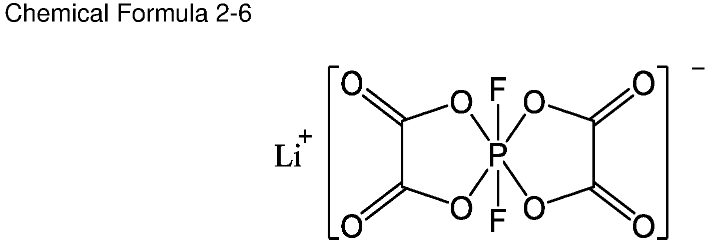

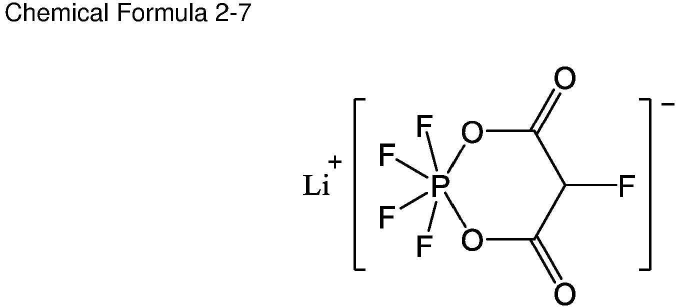

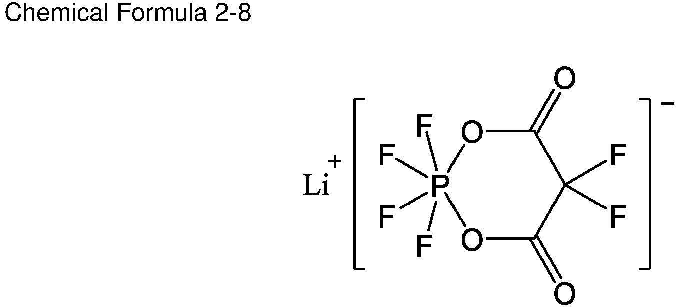

In one or more embodiments, the second compound may be included in an amount of greater than 0.05 wt%, or greater than or equal to 0.1 wt%, and less than 5 wt%, or less than or equal to 3 wt%, based on a total weight of the electrolyte solution for a rechargeable lithium battery.

For example, the second compound may be included in the amount of greater than 0.05 wt% and less than 5 wt%, for example, greater than 0.05 wt% and less than or equal to 3 wt%, greater than or equal to 0.1 wt% and less than 5 wt%, or 0.1 wt% to 3 wt% based on a total weight of the electrolyte solution for a rechargeable lithium battery.

If the second compound is included in less than or equal to 0.05 wt% or greater than or equal to 5 wt% based on a total weight of the electrolyte solution for a rechargeable lithium battery, the room-temperature cycle-life characteristics of the battery may be reduced.

In one or more embodiments, the first compound and the second compound may be included in a weight ratio of 0.05:1 to 50:1, for example, a weight ratio of 0.05:1 to 40:1, a weight ratio of 0.1:1 to 50:1, or a weight ratio of 0.1:1 to 40:1.

If the weight ratio of the first compound and the second compound satisfies the above numerical ranges, a rechargeable lithium battery with excellent or suitable safety under overcharging and rapid charging conditions and excellent or suitable room-temperature cycle-life characteristics can be implemented.

### Lithium Salt

The lithium salt dissolved in the organic solvent supplies lithium ions in a battery, enables a basic operation of a rechargeable lithium battery, and improves transportation of the lithium ions between the positive and negative electrodes.

A concentration of the lithium salt may be 0.1 M to 2.0 M. When the concentration of the lithium salt is within the above range, the electrolyte solution has appropriate or suitable conductivity and viscosity, and thus excellent or suitable performance of the electrolyte solution may be achieved and lithium ions can move effectively.

For example, the lithium salt may include LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂), x and y are each independently an integer of 1 to 20, lithium trifluoromethane sulfonate, lithium tetrafluoroethane sulfonate, and a combination thereof.

### Non-aqueous Organic Solvent

The non-aqueous organic solvent serves as a medium for transmitting (e.g., transporting) ions taking part in the electrochemical reaction of a battery.
The non-aqueous organic solvent may be a carbonate-based, ester-based, ether-based, ketone-based, or alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include methyl acetate, ethyl acetate, n-propyl acetate, dimethylacetate, methylpropionate, ethylpropionate, decanolide, mevalonolactone, valerolactone, caprolactone, and/or the like. The ether-based solvent may include dibutyl ether, tetraglyme, diglyme, dimethoxyethane, 2-methyltetrahydrofuran, 2,5-dimethyltetrahydrofuran, tetrahydrofuran, and/or the like. In addition, the ketone-based solvent may include cyclohexanone, and/or the like. The alcohol-based solvent may include ethanol, isopropyl alcohol, and/or the like and the aprotic solvent may include nitriles such as R-CN (wherein R is a C2 to C20 linear, branched, or cyclic hydrocarbon group, a double bond, an aromatic ring, or an ether bond), and/or the like; amides such as dimethylformamide; dioxolanes such as 1,3-dioxolane, 1,4-dioxolane, and/or the like; sulfolanes, and/or the like.

The non-aqueous organic solvents may be used alone or in combination of two or more.

In addition, if using a carbonate-based solvent, a cyclic carbonate and a chain carbonate may be mixed and used, and the cyclic carbonate and the chain carbonate may be mixed in a volume ratio of 1:1 to 1:9.

### Rechargeable Lithium Battery

Some embodiments provide a rechargeable lithium battery including the aforementioned electrolyte solution.

A rechargeable lithium battery according to one or more embodiments includes a positive electrode including a positive electrode active material; a negative electrode including a negative electrode active material; a separator between the positive electrode and the negative electrode; and the electrolyte solution.

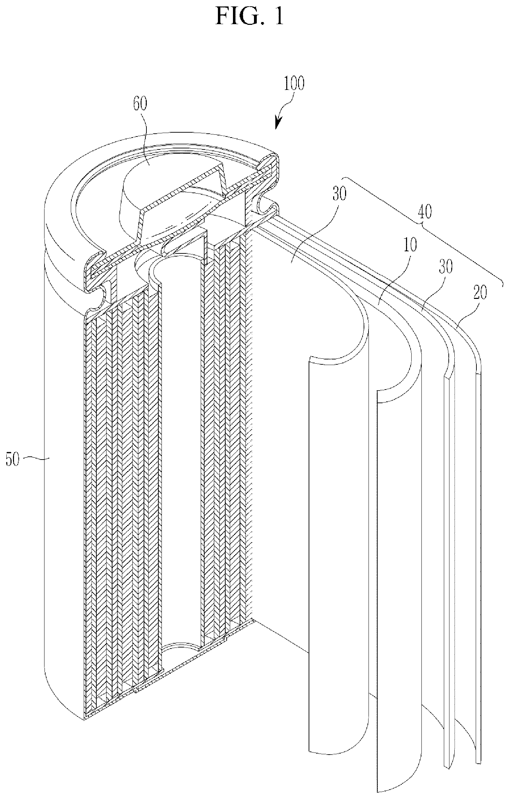

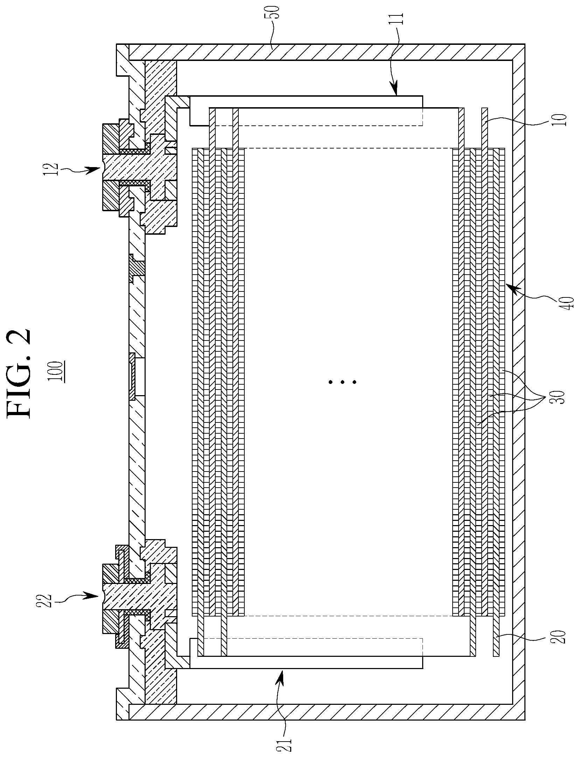

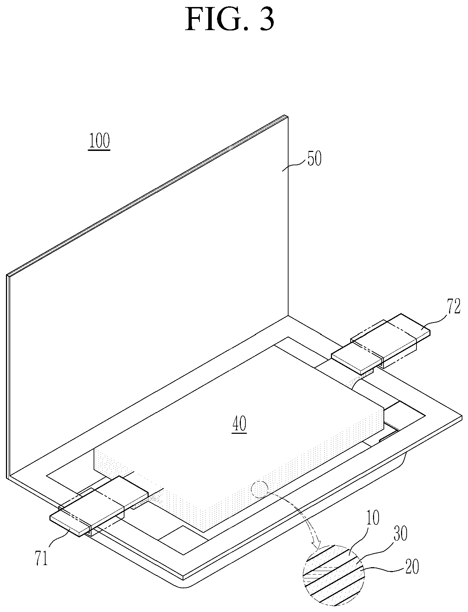

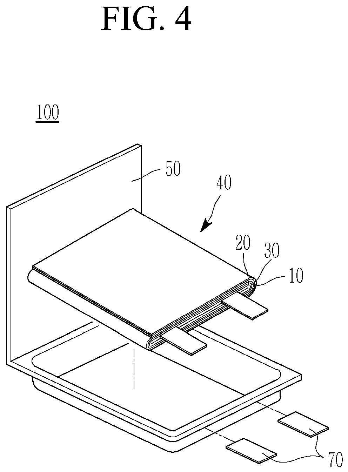

The rechargeable lithium battery may be classified into cylindrical, prismatic, pouch, coin, and/or the like depending on their shape. FIGs. 1 to 4 are schematic views illustrating a rechargeable lithium battery according to one or more embodiments. FIG. 1 shows a cylindrical battery, FIG. 2 shows a prismatic battery, and FIGs. 3 and 4 show pouch-type or kind batteries. Referring to FIGs. 1 to 4, the rechargeable lithium battery 100 includes an electrode assembly 40 including a separator 30 between a positive electrode 10 and a negative electrode 20, and a case in which the electrode assembly 40 is included (e.g., enclosed). The positive electrode 10, the negative electrode 20, and the separator 30 may be impregnated with an electrolyte solution. The rechargeable lithium battery 100 may include a sealing member 60 that seals the case 50 as shown in FIG. 1. Additionally, in FIG. 2, the rechargeable lithium battery 100 may include a positive electrode lead tab 11, a positive electrode terminal 12, a negative lead tab 21, and a negative electrode terminal 22. As shown in FIGs. 3 and 4, the rechargeable lithium battery 100 includes an electrode tab 70, that is, a positive electrode tab 71 and a negative electrode tab 72, serving as an electrical path for inducing the current formed in the electrode assembly 40 to the outside.

The rechargeable lithium battery according to one or more embodiments may be applied to automobiles, mobile phones, and/or one or more suitable types (kinds) of electric devices, but the present disclosure is not limited thereto.

### Positive Electrode Active Material

The positive electrode active material may include a compound (lithiated intercalation compound) capable of intercalating and deintercalating lithium. For example, at least one of a composite oxide of lithium and a metal selected from among cobalt, manganese, nickel, or one or morecombinations thereof may be used.

The composite oxide may be a lithium transition metal composite oxide, and non-limiting examples thereof may include lithium nickel-based oxide, lithium cobalt-based oxide, lithium manganese-based oxide, lithium iron phosphate-based compound, cobalt-free lithium nickel-manganese-based oxide, or a combination thereof.

For example, one or more compounds represented by any of the following chemical formulas may be used. LiₐA_{1-b}X_{b}O_{2-c}D_{c} (0.90≤a≤1.8, 0≤b≤0.5, and 0≤c≤0.05); LiₐMn_{2-b}X_{b}O_{4-c}D_{c} (0.90≤a≤1.8, 0≤b≤0.5, and 0≤c≤0.05); LiₐNi_{1-b-c}Co_{b}X_{c}O_{2-α}D_{α} (0.90≤a≤1.8, 0≤b≤0.5, 0≤c≤0.5, and 0<α<2); LiₐNi_{1-b-c}Mn_{b}X_{c}O_{2-α}D_{α} (0.90≤a≤1.8, 0≤b≤0.5, 0≤c≤0.5, and 0<α<2); LiₐNi_{b}Co_{c}L¹_{d}GₑO₂ (0.90≤a≤1.8, 0≤b≤0.9, 0≤c≤0.5, 0≤d≤0.5, and 0≤e≤0.1); LiₐNiG_{b}O₂ (0.90≤a≤1.8 and 0.001≤b≤0.1); LiₐCoG_{b}O₂ (0.90≤a≤1.8 and 0.001≤b≤0.1); LiₐMn_{1-b}G_{b}O₂ (0.90≤a≤1.8 and 0.001≤b≤0.1); LiₐMn₂G_{b}O₄ (0.90≤a≤1.8 and 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); or LiₐFePO₄ (0.90≤a≤1.8).

In the above chemical formulas, A is Ni, Co, Mn, or acombination thereof; X is Al, Ni, Co, Mn, Cr, Fe, Mg, Sr, V, a rare earth element or a combination thereof; D is O, F, S, P, or a combination thereof; G is Al, Cr, Mn, Fe, Mg, La, Ce, Sr, V, or a combination thereof; and L¹ is Mn, Al, or a combination thereof.

For example, the positive electrode active material may be a high nickel-based positive electrode active material having a nickel content (e.g., amount) of greater than or equal to 80 mol%, greater than or equal to 85 mol%, greater than or equal to 90 mol%, greater than or equal to 91 mol%, or greater than or equal to 94 mol% and less than or equal to 99 mol% based on 100 mol% of the metal excluding lithium in the lithium transition metal composite oxide. The high-nickel-based positive electrode active material can realize high capacity and can be applied to a high-capacity, high-density rechargeable lithium battery.

### Positive Electrode

A positive electrode for a rechargeable lithium battery may include a current collector and a positive electrode active material layer on the current collector. The positive electrode active material layer may include a positive electrode active material and may further include a binder and/or a conductive material.

For example, the positive electrode may further include an additive that can serve as a sacrificial positive electrode.

An amount of the positive electrode active material may be 90 wt% to 99.5 wt% based on 100% by weight (e.g., the total weight) of the positive electrode active material layer, and amounts of the binder and the conductive material may be 0.5 wt% to 5 wt%, respectively, based on 100 wt% of the positive electrode active material layer.

The binder serves to attach (e.g., well attach) the positive electrode active material particles to each other and also to attach (e.g., well attach) the positive electrode active material to the current collector. Examples of the binder may include polyvinyl alcohol, carboxymethylcellulose, hydroxypropylcellulose, diacetylcellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and/or the like, but the present disclosure is not limited thereto.

The conductive material is used to impart conductivity to the electrode, and any suitable material that does not cause chemical change and conducts electrons can be used in the battery. Examples of the conductive material may include a carbon-based material such as natural graphite, artificial graphite, carbon black, acetylene black, ketjen black, a carbon fiber, a carbon nanofiber, and/or carbon nanotube; a metal-based material containing copper, nickel, aluminum, silver, and/or the like, in a form of a metal powder or a metal fiber; a conductive polymer such as a polyphenylene derivative; or a mixture thereof.

Al may be used as the current collector, but the present disclosure is not limited thereto.

### Negative Electrode Active Material

The negative electrode active material may include a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, for example, crystalline carbon, amorphous carbon or a combination thereof. The crystalline carbon may be graphite such as non-shaped (e.g., having an irregular shape), sheet-shaped, flake-shaped, sphere-shaped, or fiber-shaped natural graphite or artificial graphite, and the amorphous carbon may be a soft carbon, a hard carbon, a mesophase pitch carbonization product, calcined coke, and/or the like.

The lithium metal alloy includes an alloy of lithium and a metal selected from among Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, SiOx (0 < x ≤ 2), a Si-Q alloy (wherein Q is selected from among an alkali metal, an alkaline-earth metal, a Group 13 element, a Group 14 element (excluding Si), a Group 15 element, a Group 16 element, a transition metal, a rare earth element, or a combination thereof). The Sn-based negative electrode active material may include Sn, SnOₓ (0 < x ≤ 2, e.g., SnO₂), a Sn-based alloy, or a combination thereof.

The silicon-carbon composite may be a composite of silicon and amorphous carbon. According to one or more embodiments, the silicon-carbon composite may be in a form of silicon particles and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may exist dispersed in an amorphous carbon matrix.

The silicon-carbon composite may further include crystalline carbon. For example, the silicon-carbon composite may include a core including crystalline carbon and silicon particles and an amorphous carbon coating layer on a surface of the core.

The Si-based negative electrode active material or the Sn-based negative electrode active material may be used in combination with a carbon-based negative electrode active material.

### Negative Electrode

The negative electrode for a rechargeable lithium battery includes a current collector and a negative electrode active material layer on the current collector. The negative electrode active material layer may include a negative electrode active material, and may further include a binder and/or a conductive material.

For example, the negative electrode active material layer may include 90 wt% to 99 wt% of the negative electrode active material, 0.5 wt% to 5 wt% of the binder, and 0 wt% to 5 wt% of the conductive material.

The binder serves to attach (e.g., well attach) the negative electrode active material particles to each other and also to attach (e.g., well attach) the negative electrode active material to the current collector. The binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, poly amideimide, polyimide, or a combination thereof.

The aqueous binder may be selected from among a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

When an aqueous binder is used as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include Na, K, or Li.

The dry binder may be a polymer material capable of being fibrous, and may be, for example, polytetrafluoroethylene, polyvinylidene fluoride, a polyvinylidene fluoride-hexafluoropropylene copolymer, polyethylene oxide, or a combination thereof.

The conductive material is used to impart conductivity to the electrode, and any suitable material that does not cause chemical change and conducts electrons can be used in the battery. Examples thereof may include a carbon-based material such as natural graphite, artificial graphite, carbon black, acetylene black, ketjen black, a carbon fiber, a carbon nanofiber, and/or a carbon nanotube; a metal-based material including copper, nickel, aluminum, silver, and/or the like, in a form of a metal powder or a metal fiber; a conductive polymer such as a polyphenylene derivative; or a mixture (combination) thereof.

The negative electrode current collector may include a copper foil, a nickel foil, a stainless steel foil, a titanium foil, a nickel foam, a copper foam, a polymer substrate coated with a conductive metal, or a combination thereof.

### Separator

Depending on the type or kind of the rechargeable lithium battery, a separator may be present between the positive electrode and the negative electrode. The separator may include polyethylene, polypropylene, polyvinylidene fluoride, a multilayer film of two or more layers thereof, or a mixed multilayer film such as a polyethylene/polypropylene two-layer separator, polyethylene/polypropylene/polyethylene three-layer separator, polypropylene/polyethylene/polypropylene three-layer separator, and/or the like.

The separator may include a porous substrate and a coating layer including an organic material, an inorganic material, or a combination thereof on a (e.g., one or both surfaces (e.g., opposite surfaces or sides)) of the porous substrate.

The porous substrate may be a polymer film formed of any one selected from among polyolefin such as polyethylene and/or polypropylene, polyester such as polyethylene terephthalate and/or polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene (e.g., TEFLON), or may be a copolymer or mixture of two or more thereof.

The organic material may include a polyvinylidene fluoride-based polymer or a (meth)acrylic polymer.

The inorganic material may include inorganic particles selected from among Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, or a combination thereof, but the present disclosure is not limited thereto.

The organic material and the inorganic material may be mixed in one coating layer, or a coating layer including (e.g., only) an organic material and a coating layer including (e.g., only) an inorganic material may be stacked.

Examples and comparative examples of the present disclosure are described in more detail below. However, the following examples are only examples of the present disclosure, and the present disclosure is not limited to the following examples.

### (Example)

### Example 1

1.15 M LiPF₆ as a lithium salt was dissolved in a non-aqueous organic solvent mixed with ethylene carbonate (EC), methyl ethyl carbonate (MEC), and diethyl carbonate (DEC) in a volume ratio of 20:40:40 to prepare a basic electrolyte solution.

To the basic electrolyte solution, a first compound represented by Compound 1-a and a second compound represented by Chemical Formula 2-2 were added, thereby preparing an electrolyte solution according to Example 1.

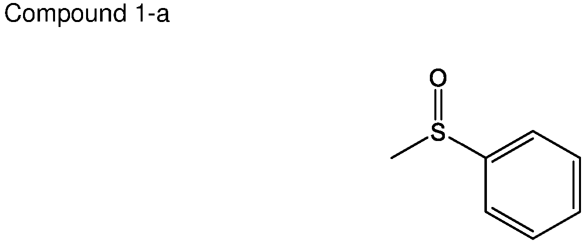

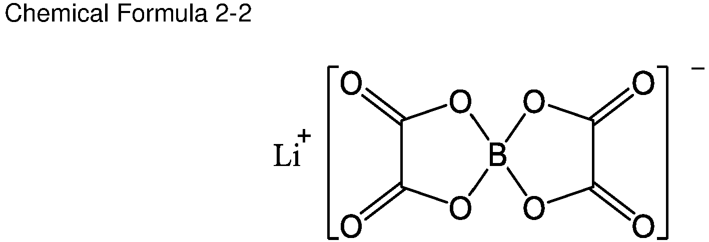

In the electrolyte solution, the first compound was included at 2 wt% and the second compound was included at 0.5 wt% based on a total amount of the electrolyte solution.

LiNi_{0.91}Co_{0.07}Al_{0.02}O₂ as a positive electrode active material, polyvinylidene fluoride as a binder, and ketjen black as a conductive material were mixed in a weight ratio of 97:2:1 and then, dispersed in N-methyl pyrrolidone, thereby preparing a positive electrode active material slurry.

The positive electrode active material slurry was coated on a 14 µm-thick Al foil, dried at 110 °C, and compressed, thereby manufacturing a positive electrode.

In addition, a negative electrode active material slurry was prepared by mixing artificial graphite as a negative electrode active material, styrene-butadiene rubber as a binder, and carboxylmethyl cellulose as a thickener in a weight ratio of 97:1:2 and dispersing the mixture in distilled water. The negative electrode active material slurry was coated on a 10 µm-thick Cu foil current collector, dried at 100 °C, and compressed, thereby manufacturing a negative electrode.

Between the positive electrode and the negative electrode, a 25 µm-thick separator with a polyethylene-polypropylene multi-layer structure was interposed to manufacture an electrode assembly, and a rechargeable lithium battery cell was manufactured by inserting the electrode assembly into a prismatic battery case (57Ah) and injecting the prepared electrolyte solution thereinto.

### Example 2

A rechargeable lithium battery cell was manufactured in substantially the same manner as in Example 1 except that the compound represented by Chemical Formula 2-1 was used as the second compound.

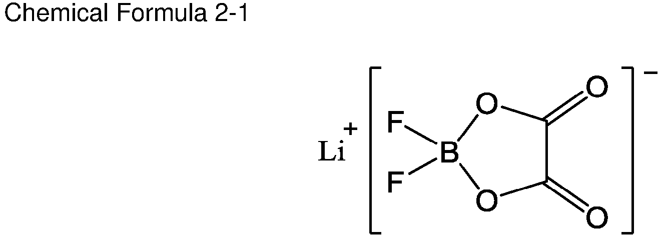

### Examples 3 to 14

Each rechargeable lithium battery cell was manufactured in substantially the same manner as in Example 1 except that the contents of the first compound and the second compound based on a total content (e.g., amount) of the electrolyte solution were changed respectively as shown in Table 1.

### Examples 15 to 19

Each rechargeable lithium battery cell was manufactured in substantially the same manner as in Example 1 except that the contents of the first compound and the second compound based on a total content (e.g., amount) of the electrolyte solution were changed respectively as shown in Table 1.

### Comparative Example 1

A rechargeable lithium battery cell was manufactured in substantially the same manner as in Example 1 except that the first compound and the second compound were not added to the electrolyte solution.

### Comparative Example 2

A rechargeable lithium battery cell was manufactured in substantially the same manner as in Example 1 except that the second compound was not added to the electrolyte solution.

### Comparative Example 3

A rechargeable lithium battery cell was manufactured in substantially the same manner as in Example 1 except that the first compound was not added to the electrolyte solution.

### Comparative Example 4

A rechargeable lithium battery cell was manufactured in substantially the same manner as in Example 2 except that the first compound was not added to the electrolyte solution.

**Table 1**

| | First compound | Second compound | |
|---|---|---|---|
| | Chemical Formula 1-a (wt%) | Chemical Formula 2-2 (wt%) | Chemical Formula 2-1 (wt%) |
| Comparative Example 1 | 0 | 0 | 0 |
| Comparative Example 2 | 2 | 0 | 0 |
| Comparative Example 3 | 0 | 0.5 | 0 |
| Comparative Example 4 | 0 | 0 | 0.5 |
| Example 1 | 2 | 0.5 | 0 |
| Example 2 | 2 | 0 | 0.5 |
| Example 3 | 0.05 | 0.5 | 0 |
| Example 4 | 0.1 | 0.5 | 0 |
| Example 5 | 0.5 | 0.5 | 0 |
| Example 6 | 1 | 0.5 | 0 |
| Example 7 | 3 | 0.5 | 0 |
| Example 8 | 5 | 0.5 | 0 |
| Example 9 | 10 | 0.5 | 0 |
| Example 10 | 2 | 0.05 | 0 |
| Example 11 | 2 | 0.1 | 0 |
| Example 12 | 2 | 1 | 0 |
| Example 13 | 2 | 3 | 0 |
| Example 14 | 2 | 5 | 0 |
| Example 15 | 2 | 0 | 0.05 |
| Example 16 | 2 | 0 | 0.1 |
| Example 17 | 2 | 0 | 1 |
| Example 18 | 2 | 0 | 3 |
| Example 19 | 2 | 0 | 5 |

### Evaluation Examples

### Evaluation Example 1: Evaluation of Overcharge/Rapid Charge Safety

The rechargeable lithium battery cells according to some of the examples (Examples 1 to 2, 4 to 8, 10 to 13, and 15 to 18) and Comparative Examples 1 to 4 were evaluated with respect to overcharge performance, and the results are shown in Table 2.

After attaching a safety protection device to a negative electrode of each of the rechargeable lithium battery cells and a tab to a positive electrode by welding, a thermocouple was attached and fixed to the center of the cells to measure a temperature.

Subsequently, the cells were charged to 6 V at a rate of 1.0 C and exposed to this voltage for 50 minutes to overcharge/rapid charge the cells.

If the cells did not ignite during the exposure time but were in substantially the same state as before the evaluation, 'Pass' is given, and if the cells ignite, 'Fail' is given, which are shown in Table 2.

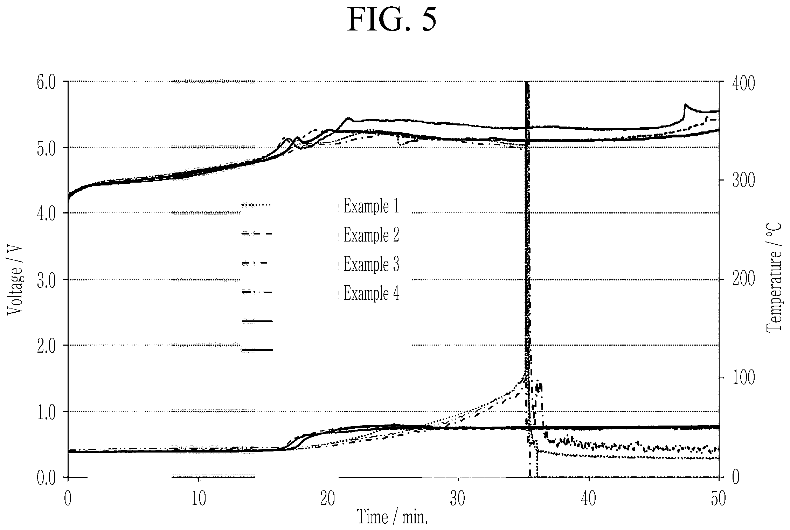

In addition, the overcharge evaluation results of the rechargeable lithium battery cells of Examples 1 to 2 and Comparative Examples 1 to 4 are shown as a graph in FIG. 5.

In FIG. 5, curves positioned relatively at the top represent voltage changes, while curves positioned relatively at the bottom represent temperature changes over time.

### Evaluation Example 2: Evaluation of Room-temperature Cycle-life

### Characteristics

The rechargeable lithium battery cells according to some of the examples (Examples 1 to 2, 4 to 8, 10 to 13, and 15 to 18) and Comparative Examples 1 to 4 were evaluated with respect to cycle-life characteristics at room temperature (25 °C).

For example, the cells were charged at 0.05 C and discharged at 0.5 C within a range of 2.8 V to 4.2 V for 465 cycles to calculate capacity retention (%) of discharge capacity at the 465^{th} cycle to discharge capacity at the 1^{st} cycle, and the results are shown in Table 2.

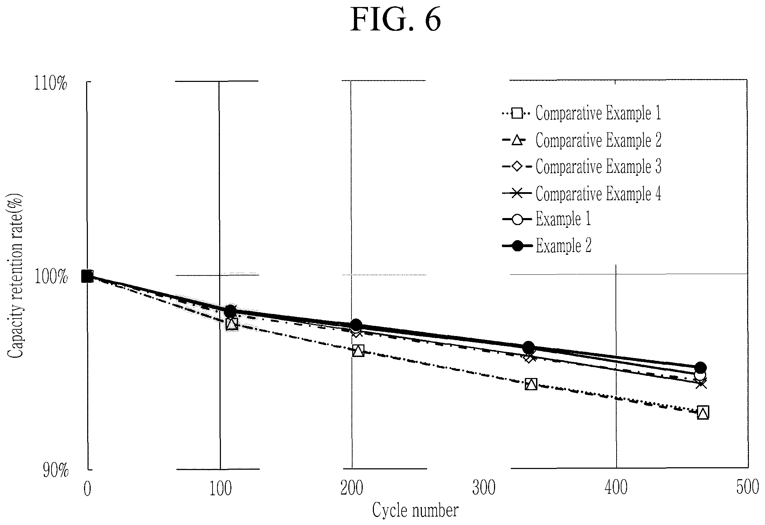

In addition, the room temperature cycle-life evaluation results of the rechargeable lithium battery cells of Examples 1 to 2 and Comparative Examples 1 to 4 are shown as a graph in FIG. 6.

**Table 2**

| | Evaluation of overcharge safety (Pass/Fail) | Room-temperature cycle-life capacity retention rate (%) |
|---|---|---|
| Comparative Example 1 | Fail | 92.9% |
| Comparative Example 2 | Pass | 92.8% |
| Comparative Example 3 | Fail | 94.5% |
| Comparative Example 4 | Fail | 94.3% |
| Example 1 | Pass | 94.8% |
| Example 2 | Pass | 95.2% |
| Example 4 | Pass | 95.1% |
| Example 5 | Pass | 95.1% |
| Example 6 | Pass | 95.0% |
| Example 7 | Pass | 94.8% |
| Example 8 | Pass | 94.6% |
| Example 10 | Pass | 92.9% |
| Example 11 | Pass | 94.9% |
| Example 12 | Pass | 95.1% |
| Example 13 | Pass | 95.1% |
| Example 15 | Pass | 92.8% |
| Example 16 | Pass | 95.2% |
| Example 17 | Pass | 95.1% |
| Example 18 | Pass | 95.0% |

Referring to Table 2, the cells of Comparative Examples 1, 3, and 4, in each which the first compound is not included in the electrolyte solution, were ignited if overcharged.

In addition, referring to FIG. 5, the cells of Examples 1 and 2 maintained a substantially constant battery temperature, even if exposed to overcharge for 50 minutes, while the cells of Comparative Examples 1, 3, and 4 exhibited an increased battery temperature to about 400°C at about 35 minutes.

Referring to Table 2 and FIG. 6, as aforementioned, the examples exhibit excellent or suitable overcharge characteristics and also, equivalent room-temperature cycle-life characteristics to the comparative examples.

Also, any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

### Reference Numerals

| | | | |
|---|---|---|---|
| 100: | rechargeable lithium battery | 10: | positive electrode |
| 11: | positive electrode lead tab | 12: | positive terminal |
| 20: | negative electrode | 21: | negative electrode lead tab |
| 22: | negative terminal | 30: | separator |
| 40: | electrode assembly | 50: | case |
| 60: | sealing member | 70: | electrode tab |
| 71: | positive electrode tab | 72: | negative electrode tab |

## Claims

1. An electrolyte solution for a rechargeable lithium battery (100) comprising:
a non-aqueous organic solvent;
a lithium salt; and
an additive,
wherein the additive comprises a first compound represented by Chemical Formula 1 and a second compound represented by Chemical Formula 2: 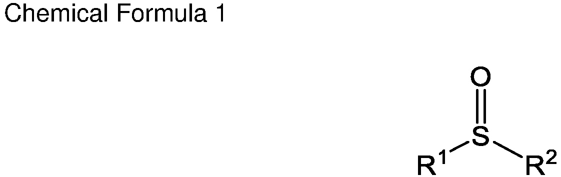 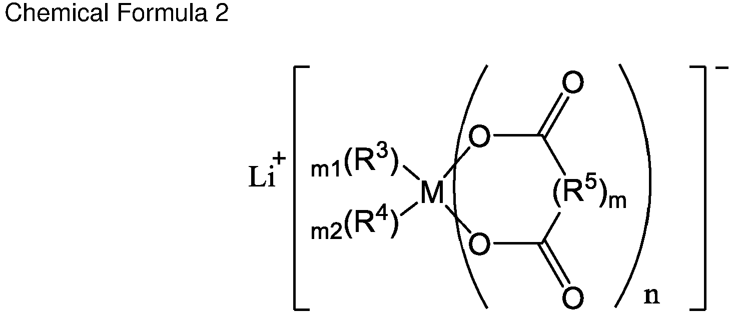
wherein, in Chemical Formula 1,
R¹ and R² are each independently a substituted or unsubstituted C1 to C20 alkyl group or a substituted or unsubstituted C6 to C30 aryl group, provided that at least one of R¹ and R² is a substituted or unsubstituted C6 to C30 aryl group,
in Chemical Formula 2,
M is boron (B) or phosphorus (P),
R³ and R⁴ are each independently hydrogen, a halogen, or a substituted or unsubstituted C1 to C10 alkyl group,
R⁵ is a substituted or unsubstituted methylene group,
n is an integer of 1 to 3,
m is 0 or 1,
m1 and m2 are each independently an integer from 0 to 2, and
wherein the term "substituted" refers to replacement of at least one hydrogen by deuterium, a halogen, a hydroxyl group, an amino group, a C1 to C30 amine group, a nitro group, a C1 to C40 silyl group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C20 alkoxy group, a C1 to C10 fluoroalkyl group, and a cyano group.

2. The electrolyte solution as claimed in claim 1, wherein
the first compound represented by Chemical Formula 1 is represented by Chemical Formula 1-1 or Chemical Formula 1-2: 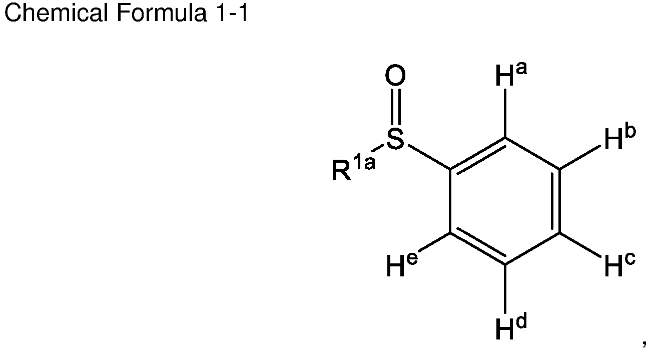
in Chemical Formula 1-1,
R^{1a} being a substituted or unsubstituted C1 to C20 alkyl group, and
H^{a} to H^{e} being each independently hydrogen, a halogen, a hydroxyl group, a cyano group, a nitro group, a substituted or unsubstituted C1 to C20 alkyl group, a substituted or unsubstituted C1 to C20 alkoxy group, a substituted or unsubstituted C2 to C20 alkenyl group, a substituted or unsubstituted C2 to C20 alkynyl group, a substituted or unsubstituted C3 to C20 cycloalkyl group, a substituted or unsubstituted C6 to C20 aryl group, or a substituted or unsubstituted C2 to C20 heteroaryl group; 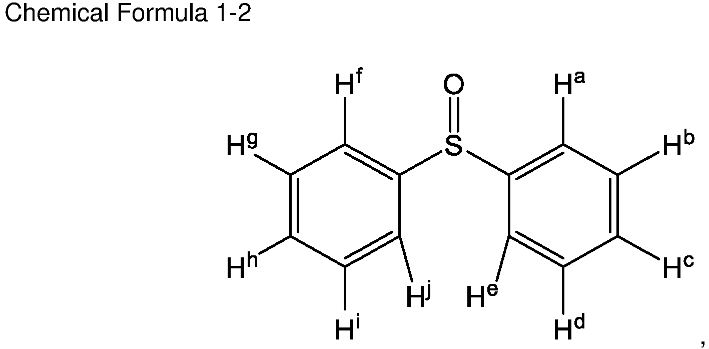 and
in Chemical Formula 1-2,
H^{a} to H^{j} being each independently hydrogen, a halogen, a hydroxyl group, a cyano group, a nitro group, a substituted or unsubstituted C1 to C20 alkyl group, a substituted or unsubstituted C1 to C20 alkoxy group, a substituted or unsubstituted C2 to C20 alkenyl group, a substituted or unsubstituted C2 to C20 alkynyl group, a substituted or unsubstituted C3 to C20 cycloalkyl group, a substituted or unsubstituted C6 to C20 aryl group, or a substituted or unsubstituted C2 to C20 heteroaryl group,
wherein the term "substituted" refers to replacement of at least one hydrogen by deuterium, a halogen, a hydroxyl group, an amino group, a C1 to C30 amine group, a nitro group, a C1 to C40 silyl group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C20 alkoxy group, a C1 to C10 fluoroalkyl group, and a cyano group.

3. The electrolyte solution as claimed in claim 1, wherein
the first compound is one or more compounds selected from among compounds in Group 1:

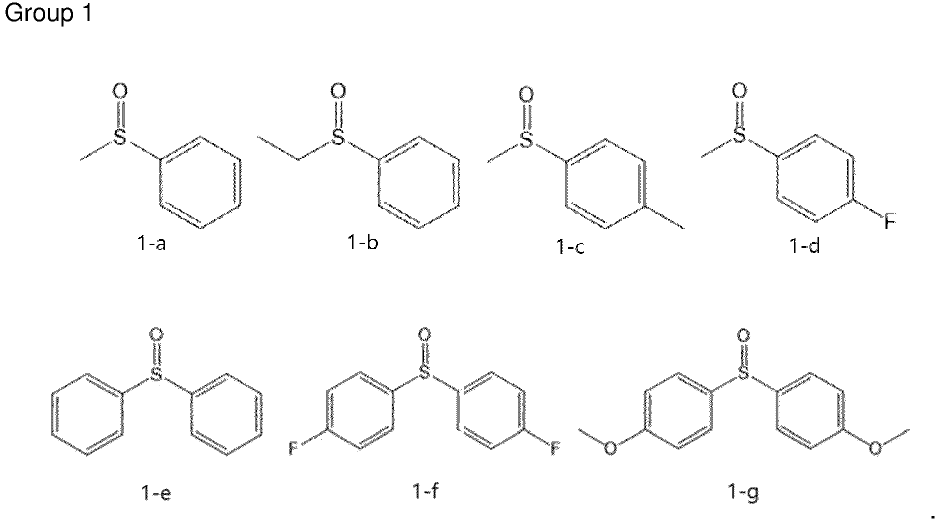

4. The electrolyte solution as claimed in any one of the preceding claims, wherein
the second compound represented by Chemical Formula 2 comprises one or more selected from among compounds represented by Chemical Formula 2-1 to Chemical Formula 2-8:

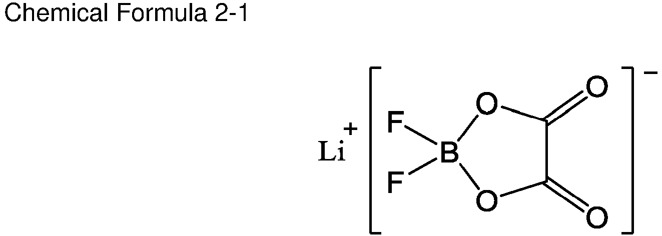

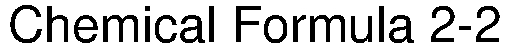

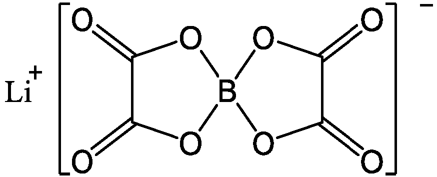

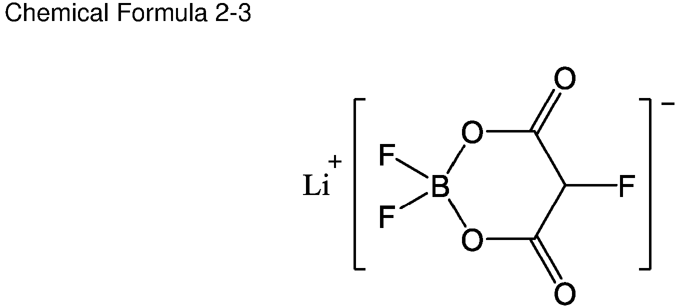

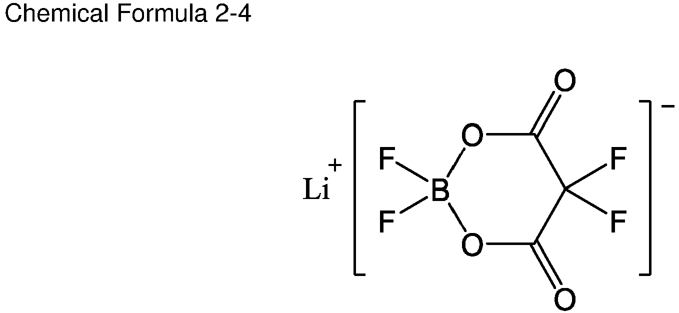

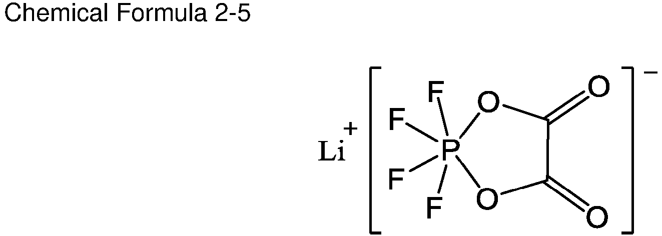

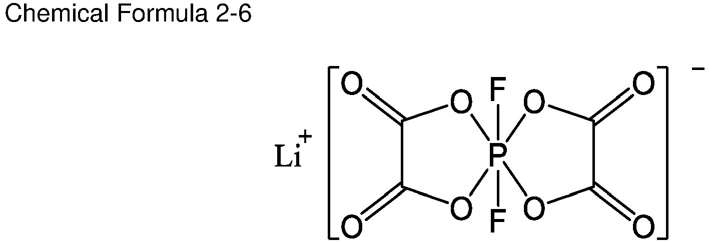

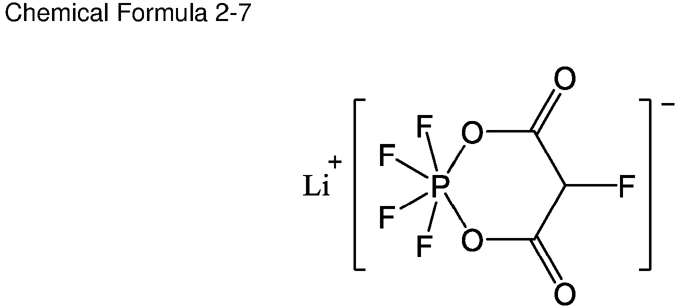

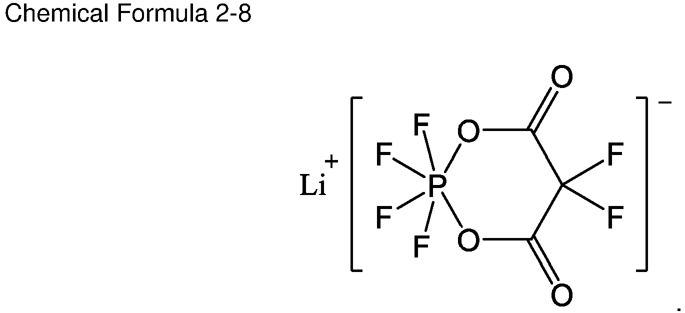

5. The electrolyte solution as claimed in any one of the preceding claims, wherein
the lithium salt comprises LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂), and x and y are each independently an integer selected from 1 to 20, lithium trifluoromethane sulfonate, lithium tetrafluoroethane sulfonate, or a combination thereof.

6. The electrolyte solution as claimed in any one of the preceding claims, wherein
the first compound is greater than 0.05 wt% and less than 10 wt% in amount based on a total weight of the electrolyte solution.

7. The electrolyte solution as claimed in any one of the preceding claims, wherein
the second compound is greater than 0.05 wt% and less than 5 wt% in amount based on a total weight of the electrolyte solution.

8. The electrolyte solution as claimed in any one of the preceding claims, wherein
the first compound and the second compound are in a weight ratio of 0.05 : 1 to 50 : 1.

9. A rechargeable lithium battery (100) comprising:
a positive electrode (10) comprising a positive electrode active material;
a negative electrode (20) comprising a negative electrode active material;
a separator between the positive electrode (10) and the negative electrode (20); and
the electrolyte solution as claimed in claim 1.

## Patentansprüche

1. Elektrolytlösung für eine wiederaufladbare Lithiumbatterie (100), umfassend:
ein nicht wässriges organisches Lösungsmittel;
ein Lithiumsalz; und
ein Additiv,
wobei das Additiv eine durch die chemische Formel 1 dargestellte erste Verbindung und eine durch die chemische Formel 2 dargestellte zweite Verbindung umfasst: 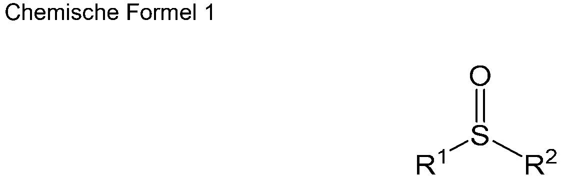 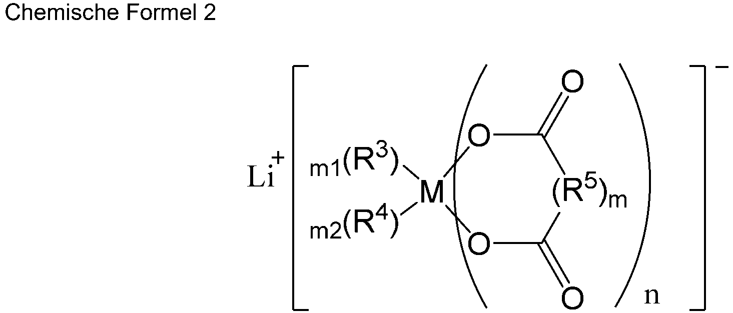
wobei in der chemischen Formel 1
R¹ und R² jeweils unabhängig eine substituierte oder unsubstituierte C1- bis C20-Alkylgruppe oder eine substituierte oder unsubstituierte C6- bis C30-Arylgruppe sind, mit der Maßgabe, dass mindestens eines von R¹ und R² eine substituierte oder unsubstituierte C6- bis C30-Arylgruppe ist,
in der chemischen Formel 2
M Bor (B) oder Phosphor (P) ist,
R³ und R⁴ jeweils unabhängig Wasserstoff, ein Halogen oder eine substituierte oder unsubstituierte C1- bis C10-Alkylgruppe sind,
R⁵ eine substituierte oder unsubstituierte Methylengruppe ist,
n eine ganze Zahl von 1 bis 3 ist,
m 0 oder 1 ist,
m1 und m2 jeweils unabhängig eine ganze Zahl von 0 bis 2 sind, und
wobei sich der Begriff "substituiert" auf den Ersatz mindestens eines Wasserstoffs durch Deuterium, ein Halogen, eine Hydroxylgruppe, eine Aminogruppe, eine C1- bis C30-Amingruppe, eine Nitrogruppe, eine C1- bis C40-Silylgruppe, eine C1- bis C30-Alkylgruppe, eine C1- bis C10-Alkylsilylgruppe, eine C6- bis C30-Arylsilylgruppe, eine C3- bis C30-Cycloalkylgruppe, eine C3- bis C30-Heterocycloalkylgruppe, eine C6- bis C30-Arylgruppe, eine C2- bis C30-Heteroarylgruppe, eine C1- bis C20-Alkoxygruppe, eine C1- bis C10-Fluoralkylgruppe und eine Cyanogruppe bezieht.

2. Elektrolytlösung nach Anspruch 1, wobei
die durch die chemische Formel 1 dargestellte erste Verbindung durch die chemische Formel 1-1 oder die chemische Formel 1-2 dargestellt ist: 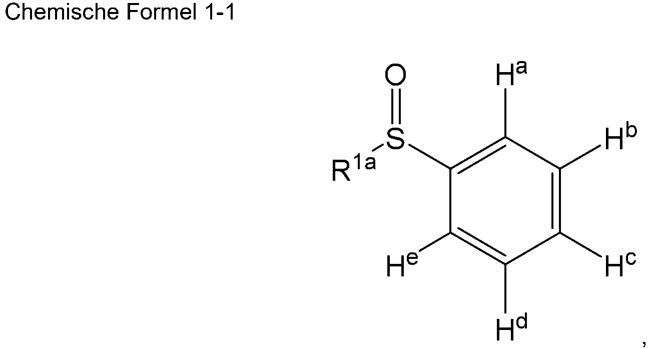
in der chemischen Formel 1-1
R^{1a} eine substituierte oder unsubstituierte C1- bis C20-Alkylgruppe ist, und
H^{a} bis H^{e} jeweils unabhängig Wasserstoff, ein Halogen, eine Hydroxylgruppe, eine Cyanogruppe, eine Nitrogruppe, eine substituierte oder unsubstituierte C1- bis C20-Alkylgruppe, eine substituierte oder unsubstituierte C1- bis C20-Alkoxygruppe, eine substituierte oder unsubstituierte C2- bis C20-Alkenylgruppe, eine substituierte oder unsubstituierte C2- bis C20-Alkinylgruppe, eine substituierte oder unsubstituierte C3- bis C20-Cykloalkylgruppe, eine substituierte oder unsubstituierte C6- bis C20-Arylgruppe oder eine substituierte oder unsubstituierte C2- bis C20-Heteroarylgruppe sind; 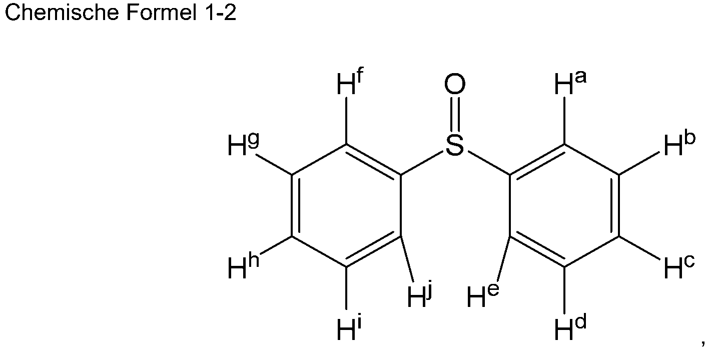 und
in der chemischen Formel 1-2
H^{a} bis H^{j} jeweils unabhängig Wasserstoff, ein Halogen, eine Hydroxylgruppe, eine Cyanogruppe, eine Nitrogruppe, eine substituierte oder unsubstituierte C1- bis C20-Alkylgruppe, eine substituierte oder unsubstituierte C1- bis C20-Alkoxygruppe, eine substituierte oder unsubstituierte C2- bis C20-Alkenylgruppe, eine substituierte oder unsubstituierte C2- bis C20-Alkinylgruppe, eine substituierte oder unsubstituierte C3- bis C20-Cykloalkylgruppe, eine substituierte oder unsubstituierte C6- bis C20-Arylgruppe oder eine substituierte oder unsubstituierte C2- bis C20-Heteroarylgruppe sind,
wobei sich der Begriff "substituiert" auf den Ersatz mindestens eines Wasserstoffs durch Deuterium, ein Halogen, eine Hydroxylgruppe, eine Aminogruppe, eine C1- bis C30-Amingruppe, eine Nitrogruppe, eine C1- bis C40-Silylgruppe, eine C1- bis C30-Alkylgruppe, eine C1- bis C10-Alkylsilylgruppe, eine C6- bis C30-Arylsilylgruppe, eine C3- bis C30-Cycloalkylgruppe, eine C3- bis C30-Heterocycloalkylgruppe, eine C6- bis C30-Arylgruppe, eine C2- bis C30-Heteroarylgruppe, eine C1- bis C20-Alkoxygruppe, eine C1- bis C10-Fluoralkylgruppe und eine Cyanogruppe bezieht.

3. Elektrolytlösung nach Anspruch 1, wobei
es sich bei der ersten Verbindung um eine oder mehrere Verbindungen handelt, die aus den Verbindungen der Gruppe 1 ausgewählt sind:

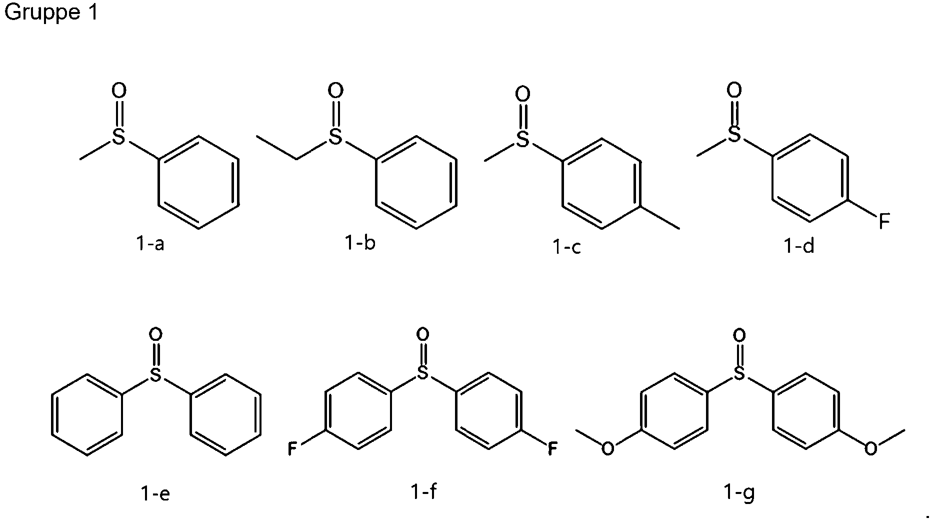

4. Elektrolytlösung nach einem der vorhergehenden Ansprüche, wobei
die durch die chemische Formel 2 dargestellte zweite Verbindung eine oder mehrere Verbindungen umfasst, die aus Verbindungen ausgewählt sind, die durch die chemische Formel 2-1 bis zur chemischen Formel 2-8 dargestellt sind:

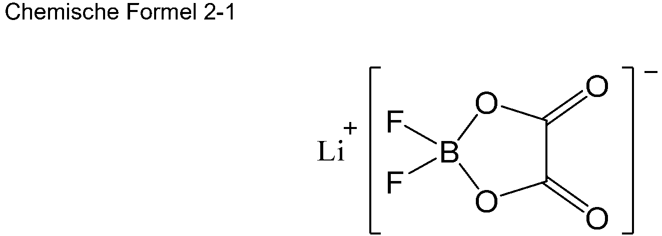

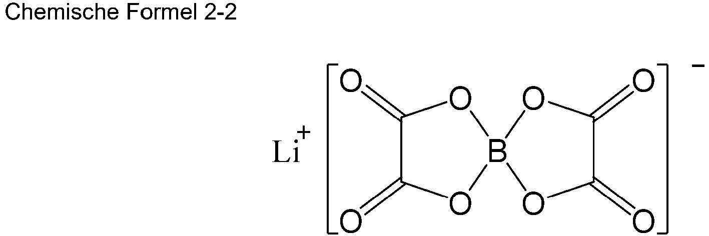

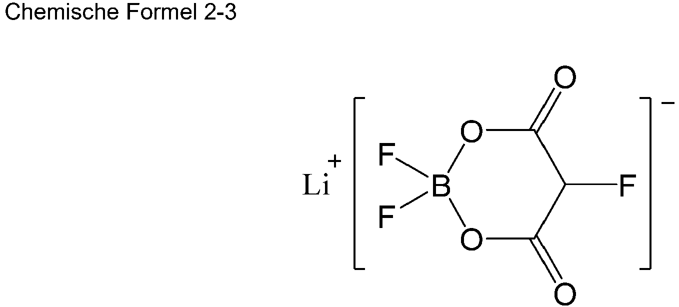

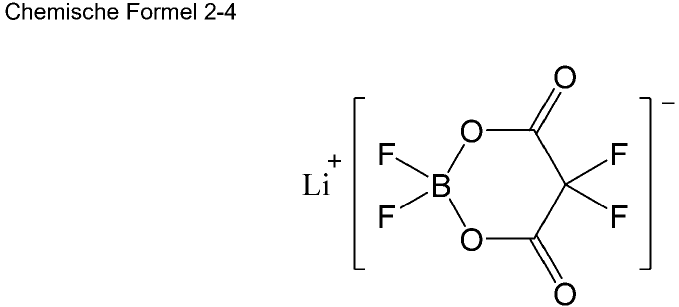

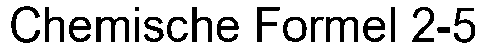

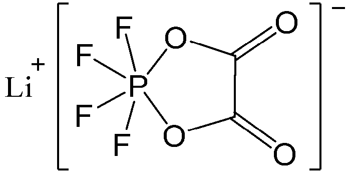

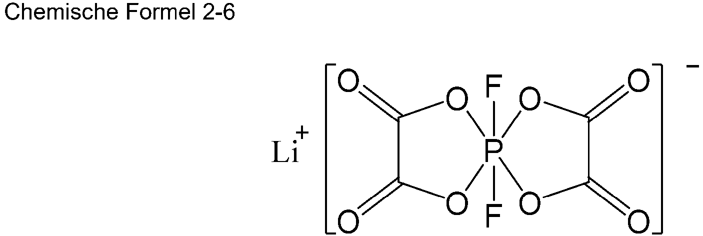

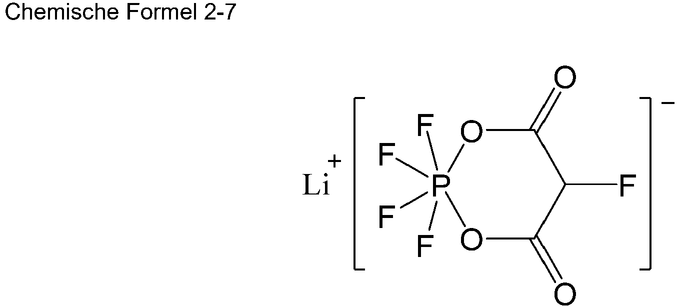

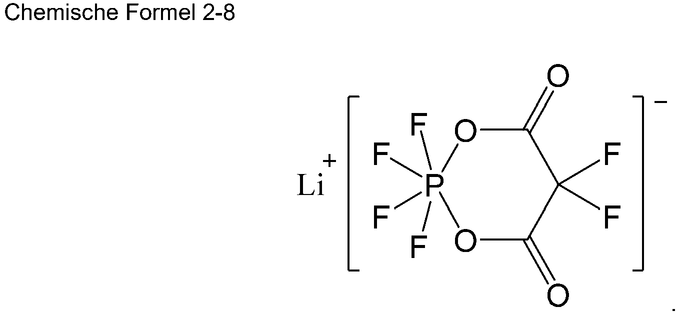

5. Elektrolytlösung nach einem der vorhergehenden Ansprüche, wobei
das Lithiumsalz LiPF₆, LiBF₄, LiSbF₆, LiAsF₆, LiClO₄, LiAlO₂, LiAlCl₄, LiPO₂F₂, LiCI, Lil, LiN(SO₃C₂F₅)₂, Li(FSO₂)₂N (Lithiumbis(fluorsulfonyl)imid, LiFSI), LiC₄F₉SO₃, LiN(CₓF₂ₓ₊₁SO₂)(C_{y}F_{2y+1}SO₂) und x und y jeweils unabhängig eine ganze Zahl, ausgewählt aus 1 bis 20 sind, Lithiumtrifluormethansulfonat, Lithiumtetrafluorethansulfonat oder eine Kombination davon umfasst.

6. Elektrolytlösung nach einem der vorhergehenden Ansprüche, wobei
die erste Verbindung in einer Menge von mehr als 0,05 Gew.-% und weniger als 10 Gew.-% basierend auf einem Gesamtgewicht der Elektrolytlösung vorhanden ist.

7. Elektrolytlösung nach einem der vorhergehenden Ansprüche, wobei
die zweite Verbindung in einer Menge von mehr als 0,05 Gew.-% und weniger als 5 Gew.-% basierend auf einem Gesamtgewicht der Elektrolytlösung vorhanden ist.

8. Elektrolytlösung nach einem der vorhergehenden Ansprüche, wobei
die erste Verbindung und die zweite Verbindung in einem Gewichtsverhältnis von 0,05:1 bis 50:1 vorhanden sind.

9. Wiederaufladbare Lithiumbatterie (100), umfassend:
eine positive Elektrode (10), die ein Aktivmaterial für die positive Elektrode umfasst;
eine negative Elektrode (20), die ein Aktivmaterial für die negative Elektrode umfasst;
einen Trenner zwischen der positiven Elektrode (10) und der negativen Elektrode (20); und
die Elektrolytlösung nach Anspruch 1.

## Revendications

1. Solution électrolytique pour une batterie rechargeable au lithium (100) comportant :
un solvant organique non aqueux ;
un sel de lithium ; et
un additif,
dans laquelle l'additif comporte un premier composé représenté par la Formule chimique 1 et un deuxième composé représenté par la Formule chimique 2 : 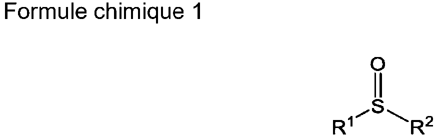 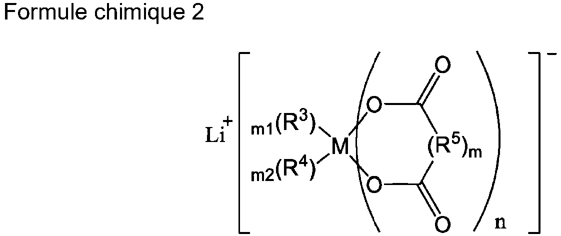
dans laquelle, dans la Formule chimique 1,
R¹ et R² sont chacun indépendamment un groupe alkyle en C1 à C20 substitué ou non substitué ou un groupe aryle en C6 à C30 substitué ou non substitué, à condition qu'au moins un parmi R¹ et R² soit un groupe aryle en C6 à C30 substitué ou non substitué,
dans la Formule chimique 2,
M est bore (B) ou phosphore (P),
R³ et R⁴ sont chacun indépendamment hydrogène, un halogène ou un groupe alkyle en C1 à C10 substitué ou non substitué,
R⁵ est un groupe méthylène substitué ou non substitué,
n est un nombre entier de 1 à 3,
m est 0 ou 1,
m1 et m2 sont chacun indépendamment un nombre entier de 0 à 2, et
dans laquelle le terme « substitué » désigne le remplacement d'au moins un hydrogène par le deutérium, un halogène, un groupe hydroxyle, un groupe amino, un groupe amine en C1 à C30, un groupe nitro, un groupe silyle en C1 à C40, un groupe alkyle en C1 à C30, un groupe alkylsilyle en C1 à C10, un groupe arylsilyle en C6 à C30, un groupe cycloalkyle en C3 à C30, un groupe hétérocycloalkyle en C3 à C30, un groupe aryle en C6 à C30, un groupe hétéroaryle en C2 à C30, un groupe alcoxy en C1 à C20, un groupe fluoroalkyle en C1 à C10, et un groupe cyano.

2. Solution électrolytique selon la revendication 1, dans laquelle
le premier composé représenté par la Formule chimique 1 est représenté par la Formule chimique 1-1 ou la Formule chimique 1-2 : 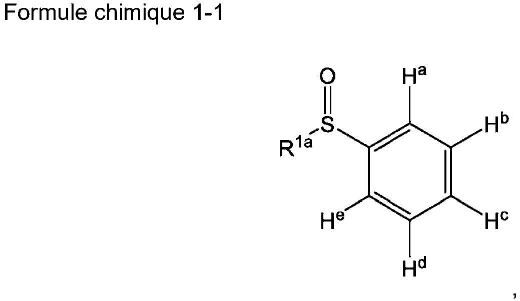
dans la Formule chimique 1-1,
R^{1a} étant un groupe alkyle en C1 à C20 substitué ou non substitué, et
H^{a} à H^{e} étant chacun indépendamment hydrogène, un halogène, un groupe hydroxyle, un groupe cyano, un groupe nitro, un groupe alkyle en C1 à C20 substitué ou non substitué, un groupe alcoxy en C1 à C20 substitué ou non substitué, un groupe alcényle en C2 à C20 substitué ou non substitué, un groupe alcynyle en C2 à C20 substitué ou non substitué, un groupe cycloalkyle en C3 à C20 substitué ou non substitué, un groupe aryle en C6 à C20 substitué ou non substitué, ou un groupe hétéroaryle en C2 à C20 substitué ou non substitué ; 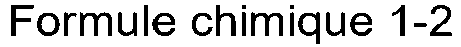 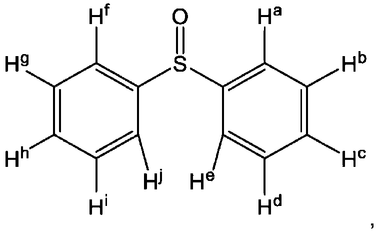 et
dans la Formule chimique 1-2
H^{a} à H^{j} étant chacun indépendamment hydrogène, un halogène, un groupe hydroxyle, un groupe cyano, un groupe nitro, un groupe alkyle en C1 à C20 substitué ou non substitué, un groupe alcoxy en C1 à C20 substitué ou non substitué, un groupe alcényle en C2 à C20 substitué ou non substitué, un groupe alcynyle en C2 à C20 substitué ou non substitué, un groupe cycloalkyle en C3 à C20 substitué ou non substitué, un groupe aryle en C6 à C20 substitué ou non substitué, ou un groupe hétéroaryle en C2 à C20 substitué ou non substitué,
dans laquelle le terme « substitué » désigne le remplacement d'au moins un hydrogène par le deutérium, un halogène, un groupe hydroxyle, un groupe amino, un groupe amine en C1 à C30, un groupe nitro, un groupe silyle en C1 à C40, un groupe alkyle en C1 à C30, un groupe alkylsilyle en C1 à C10, un groupe arylsilyle en C6 à C30, un groupe cycloalkyle en C3 à C30, un groupe hétérocycloalkyle en C3 à C30, un groupe aryle en C6 à C30, un groupe hétéroaryle en C2 à C30, un groupe alcoxy en C1 à C20, un groupe fluoroalkyle en C1 à C10, et un groupe cyano.

3. Solution électrolytique selon la revendication 1, dans laquelle
le premier composé est un ou plusieurs composés sélectionnés parmi les composés du Groupe 1 :

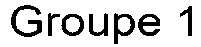

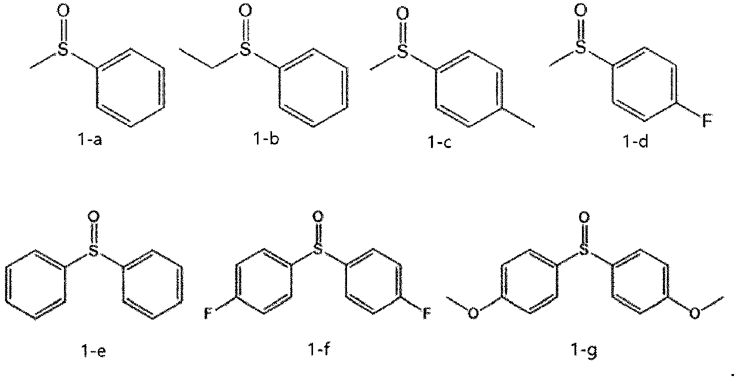

4. Solution électrolytique selon l'une quelconque des revendications précédentes, dans laquelle le deuxième composé représenté par la Formule chimique 2 comporte un ou plusieurs composés sélectionnés parmi les composés représentés par la Formule chimique 2-1 à la Formule chimique 2-8 :

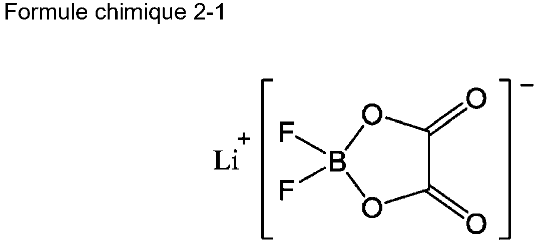

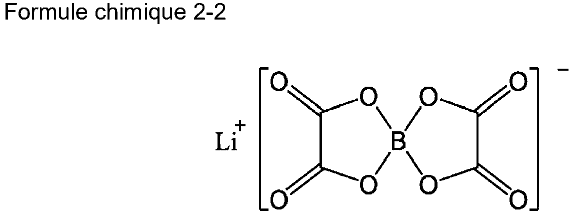

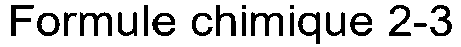

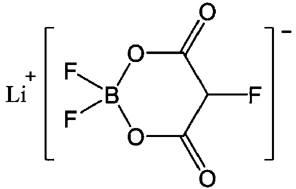

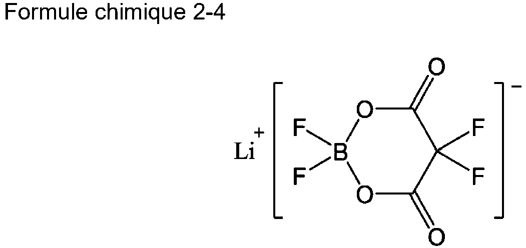

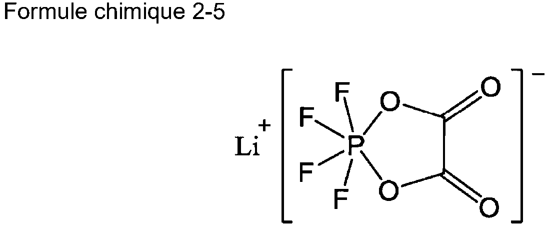

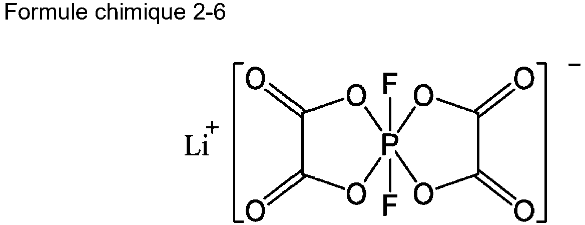

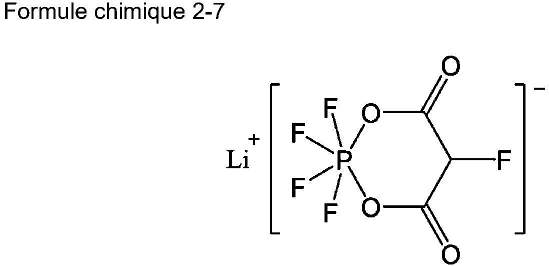

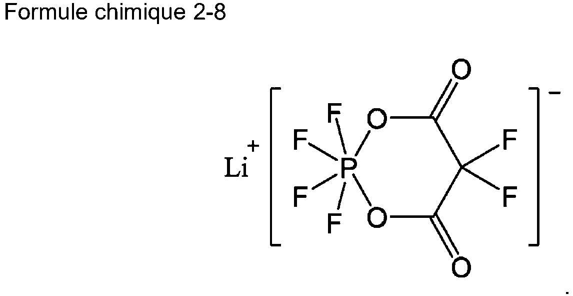

5. Solution électrolytique selon l'une quelconque des revendications précédentes, dans laquelle le sel de lithium comporte LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (bis(fluorosulfonyl)imide de lithium, LiFSI), LiC₄F₉SO₃, LiN(CₓF₂ₓ₊₁SO₂)(C_{y}F_{2y+1}SO₂), et x et y sont chacun indépendamment un nombre entier sélectionné de 1 à 20, du trifluorométhanesulfonate de lithium, du tétrafluoroéthanesulfonate de lithium, ou une combinaison de ceux-ci.

6. Solution électrolytique selon l'une quelconque des revendications précédentes, dans laquelle le premier composé est présent en une quantité supérieure à 0,05 % en poids et inférieure à 10 % en poids par rapport à un poids total de la solution électrolytique.

7. Solution électrolytique selon l'une quelconque des revendications précédentes, dans laquelle le deuxième composé est présent en une quantité supérieure à 0,05 % en poids et inférieure à 5 % en poids par rapport à un poids total de la solution électrolytique.

8. Solution électrolytique selon l'une quelconque des revendications précédentes, dans laquelle le premier composé et le deuxième composé sont dans un rapport pondéral de 0,05 : 1 à 50 : 1.

9. Batterie rechargeable au lithium (100) comportant :
une électrode positive (10) comportant un matériau actif d'électrode positive ;
une électrode négative (20) comportant un matériau actif d'électrode négative ;
un séparateur entre l'électrode positive (10) et l'électrode négative (20) ; et
la solution électrolytique selon la revendication 1.
